# FASCICULE DE BREVET EUROPEEN

(11) **EP 3 015 368 B1**
(45) Date de publication et mention de la délivrance du brevet: **26.07.2017**
(21) Numéro de dépôt: 15189457.3
(22) Date de dépôt: 13.10.2015
(51) Int. Cl.: B64D 27/26

(54) **DISPOSITIF DE FIXATION D'UN MOTEUR D'AÉRONEF, ET AÉRONEF CORRESPONDANT**
BEFESTIGUNGSVORRICHTUNG FÜR EINEN MOTOR EINES LUFTFAHRZEUGS, UND ENTSPRECHENDES LUFTFAHRZEUG
DEVICE FOR ATTACHING AN AIRCRAFT ENGINE, AND CORRESPONDING AIRCRAFT

(30) Priorité: 30.10.2014 FR 1460416
(43) Date de publication de la demande: 04.05.2016
(73) Titulaire: AIRBUS OPERATIONS (S.A.S), 31060 Toulouse (FR)
(72) Inventeur: SERRA, Bruno, 31770 COLOMIERS (FR); GARRIGUES, Richard, 31320 VIGOULET-AUZIL (FR)
(74) Mandataire: Gicquel, Olivier Yves Gérard

(56) Documents cités:
- EP-A1- 1 535 838
- EP-A1- 1 982 915
- EP-A2- 1 302 680
- FR-A1- 2 887 853
- US-A- 3 831 888

## Description

### DOMAINE DE L'INVENTION

La présente invention concerne un dispositif de fixation d'un moteur d'aéronef. Elle concerne également un aéronef comprenant un tel dispositif de fixation.

### ART ANTERIEUR

Dans de nombreux aéronefs destinés au transport de passagers, les moteurs de l'aéronef sont suspendus à un mât qui est lui-même fixé en-dessous de la voilure de l'aéronef.

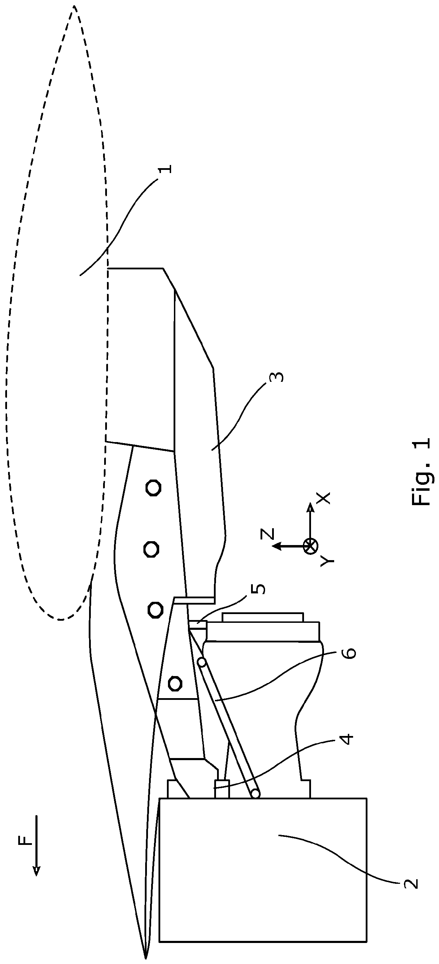

La figure 1 représente schématiquement une liaison entre une aile 1 d'un aéronef et un moteur 2, constitué par un turboréacteur à double flux. Cette liaison est assurée par l'intermédiaire du mât 3 qui permet de transmettre à la structure de l'aéronef les efforts générés par le moteur 2 et permet également le cheminement des conduites de carburant, des systèmes électriques, hydrauliques et air entre le moteur 2 et l'aile 1 de l'aéronef.

Dans la description qui suit, l'avant et l'arrière sont définis relativement à une direction d'avancement F de l'aéronef. De plus, on appelle direction longitudinale X la direction de l'axe de rotation du moteur 2, direction transversale Y la direction s'étendant perpendiculairement à la direction longitudinale X, dans un plan horizontal, et direction horizontale Z la direction s'étendant perpendiculairement à la direction longitudinale X, dans un plan sensiblement vertical. Ces trois directions X, Y et Z sont orthogonales entre elles.

La fixation du moteur 2 sur le mât 3 est réalisée par un dispositif de fixation comprenant une attache avant 4, une attache arrière 5, et des bielles de reprises d'effort 6. Ce dispositif de fixation supporte d'une part le poids du moteur 2 et d'autre part les efforts importants générés par le moteur 2, qui s'exercent dans des sens différents quand le moteur 2 propulse l'aéronef et quand le moteur 2, grâce à un système d'inversion de poussée, freine l'aéronef.

Dans l'attache moteur arrière 5, la fixation du moteur 2 au mât 3 est, dans certains aéronef, assurée notamment par l'intermédiaire d'une manille, ou bielle, reliée, par l'intermédiaire de liaisons rotules, à deux axes sensiblement parallèles portés chacun par des chapes, l'un des axes étant solidarisé au mat 3 et l'autre axe étant solidarisé au moteur 2.

En fonction des efforts exercés par le moteur 2, celui-ci peut se déplacer légèrement par rapport au mât 3. Les liaisons rotules connectant la manille aux deux axes permet ces déplacements sans endommager l'attache 5. Cependant, ces rotules permettent également à la manille de pivoter autour d'un axe passant le centre des deux rotules, jusqu'à des positions dans lesquelles les bords de la manille entrent en contact avec les flancs des chapes portant les axes.

Un tel contact entre des pièces subissant des efforts et des vibrations très importants peut engendrer une usure prématurée de la manille et/ou des chapes, pouvant nécessiter leur remplacement à des intervalles rapprochés. Ce remplacement de pièces représente bien sur un coût important pour les exploitants de l'aéronef.

Le document EP1 982 915 représente un autre exemple de dispositif de fixation d'un moteur à un mât. Ledit document est considéré comme l'art antérieur le plus proche et décrit les caractéristiques du préambule de la revendication 1. La présente invention a pour objectif de remédier à cet inconvénient de l'art antérieur.

### OBJECTIFS DE L'INVENTION

Plus précisément, un objectif de l'invention est de fournir un dispositif de fixation d'un moteur d'aéronef pour lequel les opérations de maintenance sont réduites.

Un objectif particulier de l'invention est de fournir un tel dispositif de fixation d'un moteur d'aéronef dans lequel l'usure des pièces de fixation du moteur est réduite.

### EXPOSE DE L'INVENTION

Ces objectifs, ainsi que d'autres qui apparaitront plus clairement par la suite, sont atteints par un dispositif de fixation d'un moteur d'aéronef à un mât solidaire de la structure de l'aéronef, le dispositif de fixation comprenant :
- une poutre, apte à être solidarisée au mât, et comprenant une première chape qui comprend deux flancs reliés l'un à l'autre par un premier axe de fixation ;
- une seconde chape, solidaire du moteur, et comprenant deux flancs reliés l'un à l'autre par un second axe de fixation ;
- une manille connectée au premier axe par l'intermédiaire d'une première liaison rotule, et au second axe par l'intermédiaire d'une seconde liaison rotule ;
le dispositif de fixation comprenant au moins une paire de rondelles, disposées autour de l'un des axes, de part et d'autre de la manille, et séparant cette manille des flancs de la chape portant ledit axe, la manille entrant en contact avec les rondelles dans ses positions extrêmes de rotation autour de l'axe passant par les deux liaisons rotules.

La mise en place des rondelles entre la manille et les flancs permet d'éviter tout contact et tout frottement entre les flancs et la manille, ce qui évite l'usure de ces pièces les unes contre les autres.

Préférentiellement, les rondelles sont constituées dans un matériau de dureté inférieure au matériau constituant la manille.

De préférence, les rondelles présentent un bord externe circulaire.

Avantageusement, ces rondelles présentent, à proximité de ce bord externe, un bourrelet circulaire.

L'invention concerne également un aéronef, comprenant un moteur fixé à un mât de fixation solidaire de la structure de l'aéronef, par l'intermédiaire d'un dispositif de fixation tel que décrit ci-dessus.

### LISTE DES FIGURES

L'invention sera mieux comprise à la lecture de la description suivante d'un mode de réalisation préférentiel, donné à titre d'exemple illustratif et non limitatif, et accompagné des figures parmi lesquelles :
- la figure 1, qui a déjà été commentée, représente schématiquement la fixation d'un moteur d'aéronef sous la voilure de l'aéronef, selon l'art antérieur ;
- la figure 2 représente en perspective l'attache arrière d'un moteur d'aéronef ;
- la figure 3 représente en vue de face l'attache arrière de la figure 2 ;
- les figures 4a à 4c, représentent, en vue de côté, l'attache de la figure 2, dans trois positions possibles en l'absence de rondelles selon un mode de réalisation de l'invention ;
- la figure 5 représente en vue de coupe l'assemblage d'une manille à une chape, dans l'attache arrière de la figure 2, équipée de rondelles selon un mode de réalisation de l'invention ;
- la figure 6 représente la manille, les douilles et les rondelles mis en oeuvre dans l'assemblage de la figure 5 ;
- la figure 7 représente en vue de coupe une rondelle mise en oeuvre dans l'assemblage de la figure 5 ;
- la figure 8 représente les douilles et les rondelles mises en oeuvre dans l'assemblage de la figure 5.

### DESCRIPTION D'UN MODE DE REALISATION

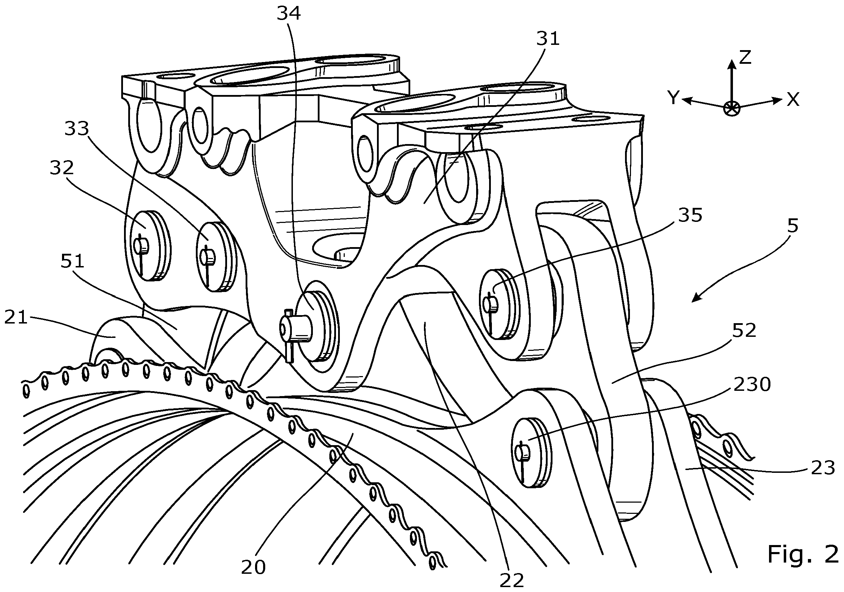

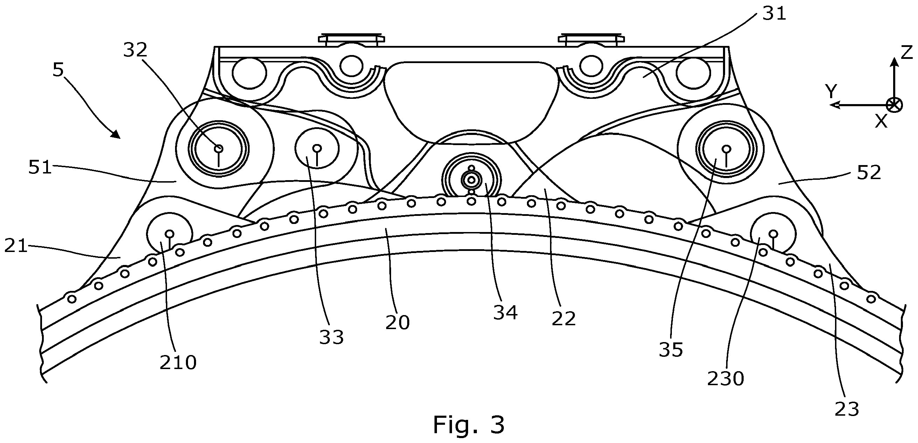

Les figures 2 et 3 représentent l'attache arrière 5 d'un moteur 2 d'un aéronef. Cette attache 5 comprend une poutre 31, apte à être solidarisée à un mât 3 de l'aéronef. Cette poutre 31 comprend plusieurs chapes, une chape étant, dans la présente description, constituée par deux flancs sensiblement parallèles portant au moins un axe s'étendant d'un flanc à l'autre. Plus précisément, la poutre 31 comporte une chape 32 portant les axes de fixation 320 et 330, orientés selon la direction longitudinale, une chape 34 portant un axe de fixation 340 orienté selon la direction longitudinale, et un chape 35, également appelée « première chape » dans la présente description, portant un axe de fixation 350 orienté selon la direction longitudinale.

L'axe 350, porté par la première chape 35, est connecté à un axe de 230, porté par une chape 23 solidaire du carter 20 du moteur 2. Cette chape 23 est également appelée « seconde chape » dans la présente description. Cette connexion est réalisée par une manille 52, ou bielle, présentant deux trous parallèles, permettant le passage de deux axes 350 et 230.

L'axe de fixation 340 passe dans un trou prévu dans une patte de fixation centrale 22, solidaire du carter 20 du moteur 2. Les deux axes de fixation 320 et 330 sont connectés à un axe de fixation 210 porté par une chape 21, elle-même solidaire du carter 20 du moteur 2. Cette connexion est réalisée par une manille 51 comprenant trois trous parallèles, permettant le passage des trois axes 320, 330 et 210.

Une manille, au sens de la présente description, est une pièce sensiblement plate présentant plusieurs trous pour connecter entre eux plusieurs axes sensiblement parallèles passant par ces trous. Une manille qui, comme la manille 52, comprend deux trous pour connecter deux axes parallèles, est équivalente à une bielle.

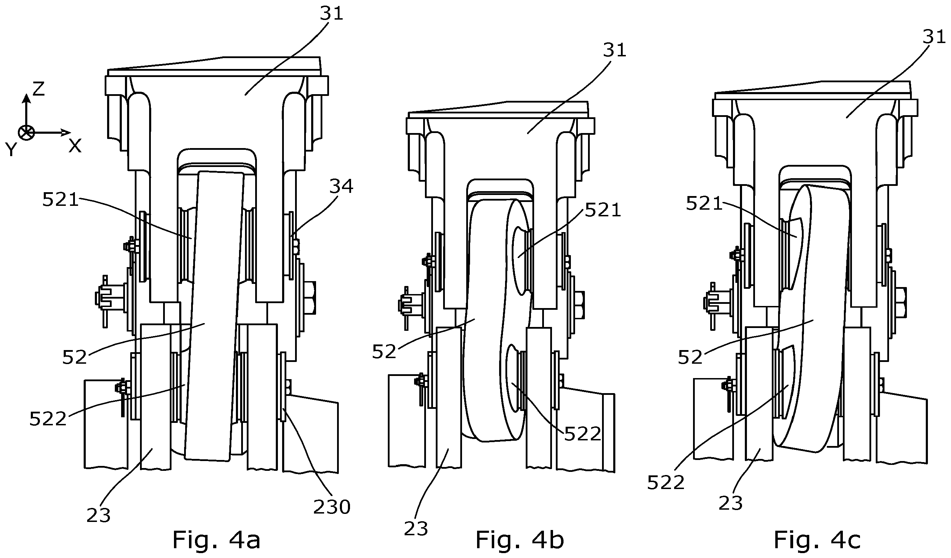

Les figures 4a, 4b et 4c représentent, en vue de côté, la première chape 35, solidaire de la poutre 31, la seconde chape 23, solidaire du carter 20 du moteur 2, et la manille 52. Dans la configuration représentée par ces figures, le dispositif de fixation ne comprend pas de rondelles. En fonction des efforts exercés par le moteur 2, la seconde chape 23 liée au moteur 2 peut se déplacer légèrement par rapport à la première chape 35 solidaire du mât 3. Pour permettre ces déplacements sans endommager les attaches moteur, la manille 52 est fixée aux axes 350 et 230 par l'intermédiaire de rotules 521 et 522. Ces rotules 521 et 522 permettent à la manille 52 de pivoter par rapport à sa position nominale représentée par la figure 4a, autour d'un axe passant le centre des deux rotules, entre des positions extrêmes représentées par les figures 4b et 4c. Dans ces positions extrêmes, les bords de la manille 52 entrent en contact avec les flancs de la première chape 35 ou de la seconde chape 23.

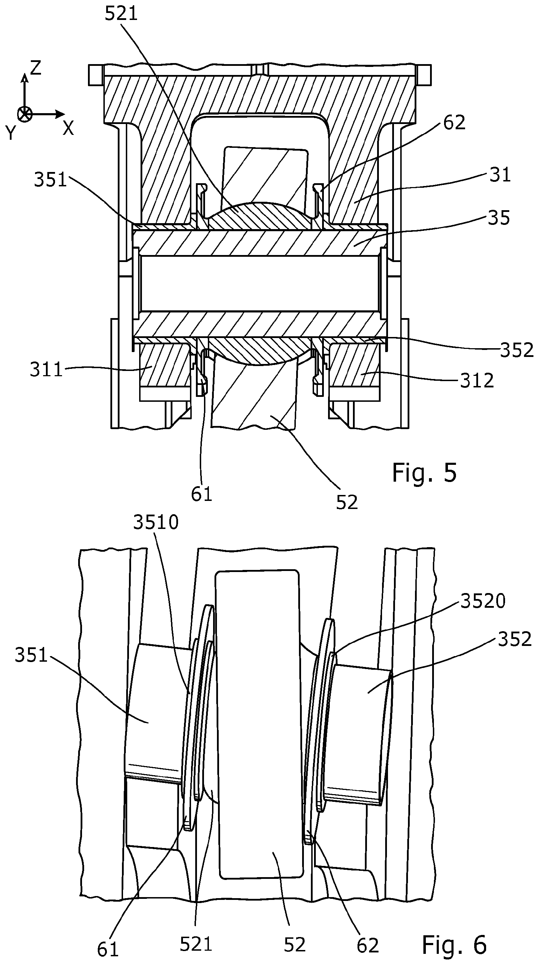

Pour éviter une usure prématurée de la manille 52 ou des flancs de la première chape 35 ou de la seconde chape 23, il est prévu, selon un mode de réalisation de l'invention, de placer des rondelles 61, 62, dans le dispositif de fixation, comme le montre notamment la figure 5. La figure 5 représente ainsi en vue de coupe l'assemblage de la manille 52 à la première chape 35.

Pour empêcher que cette manille 52 ne rentre en contact avec les flancs 311 et 312 de la chape 35 qui porte l'axe 350, il est prévu de placer sur l'axe 350 deux rondelles 61 et 62, disposées de part et d'autre de la manille 52, et séparant cette manille 52 des flancs 311 et 312 de la chape 35. Ainsi, la rondelle 61 sépare le flanc 311 de la manille 52, et la rondelle 62 sépare le flanc 312 de la manille 52. Comme le montre la figure 6, la présence de ces rondelles limite le pivotement de la manille 52 autour de l'axe passant par le centre des rotules 521 et 522, et empêche en conséquence le contact entre la manille 52 et les flancs 521 et 522 de la chape 31.

La manille 52 entrant en contact avec les rondelles 61 et 62, une usure peut apparaitre entre ces pièces. De préférence, les rondelles 61 et 62 sont des pièces d'usure formées dans un matériau moins dur que la manille 52. Elles peuvent par exemple être constituées dans un métal tel que le cuivre ou un alliage tel que le laiton, quand la manille 52 est fabriquée en acier. De façon générale, tout matériau, notamment métallique, présentant une dureté (mesurée avec des procédés conventionnels) inférieure à la dureté du matériau composant la manille, peut être utilisé. Ainsi, le contact entre ces pièces entraine une usure des rondelles 61 et 62, sans entrainer d'usure significative de la manille 52. Les rondelles 61 et 62 n'ayant pas de fonction mécanique d'attache du moteur, leur usure n'affecte pas la sécurité du dispositif de fixation, et n'impose pas leur remplacement tant qu'elles remplissent leur rôle de séparation entre la manille 52 et les flancs 311 et 312 de la chape 31.

Le dispositif de fixation de moteur selon l'invention permet ainsi de réduire le nombre d'opérations de maintenance sur l'attache arrière. De plus, quand une maintenance est effectuée, il n'est nécessaire de changer que les rondelles 61 et 62, qui sont des pièces d'usure peu onéreuses, sans qu'il soit nécessaire de changer la chape 35 ou la manille 52.

La figure 5 montre la manière dont sont montées les rondelles 61 et 62 sur l'axe 350. Comme le montre cette figure, l'axe 350 est monté dans les trous des flancs 311 et 312 de la chape 35 par l'intermédiaire de douilles, ou bagues 351 et 352. Chacune de ces bagues, respectivement 351 et 352, comportent une portion cylindrique entourant l'axe 350 et une collerette, respectivement 3510 et 3520, destinée à venir en appui contre la face interne du flanc, respectivement 311 et 312, de la chape 35. Quand le dispositif de fixation du moteur est monté, la rondelle 61 est intercalée entre la collerette 3510 de la bague 351, et la rotule 521. De même, la rondelle 62 est intercalée entre la collerette 3520 de la bague 352 et la rotule 521. Les collerettes 3510 et 3520 séparent donc les rondelles 61 et 62 des flancs 311 et 312.

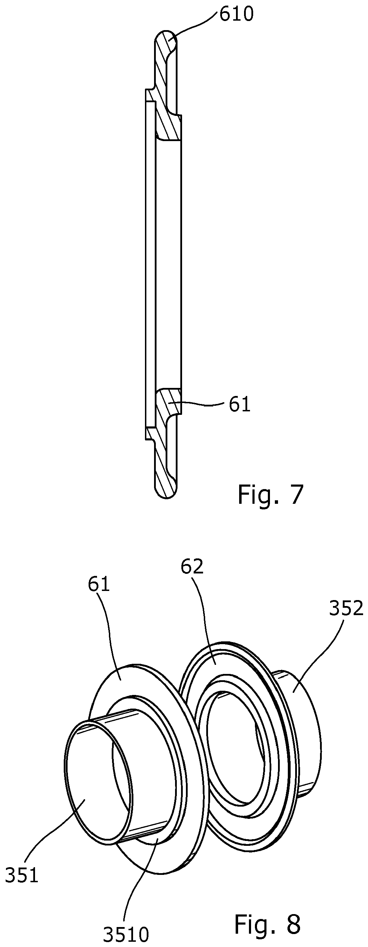

La figure 7 représente la rondelle 61 en vue de coupe selon son diamètre. Comme le montre cette figure, la rondelle 61 présente, à proximité de son bord externe de qui est de préférence circulaire, un bourrelet périphérique 610, circulaire, qui est destiné à entrer en contact avec la manille 52 et à être usé par cette manille. L'épaisseur de ce bourrelet permet que la rondelle 61 puisse supporter une usure importante de son bourrelet 610 avant de devoir être remplacées.

La rondelle 61 représentée est en forme de disque. Il est cependant possible, selon d'autres modes de réalisation que peut mettre en oeuvre l'homme du métier, d'utiliser des rondelles présentant des formes différentes. L'homme du métier choisira pour cela des rondelles présentant des formes et des dimensions lui permettant d'empêcher le contact entre la manille et les flancs de la chape portant l'axe fixé à la manille.

De façon avantageuse, des rondelles similaires peuvent également être disposées autour du second axe 230, de part et d'autre de la manille 52, pour empêcher le contact entre cette manille et les flancs de la chape 23. Plus généralement, il peut être avantageux de mettre en oeuvre de telles rondelles au niveau de la liaison de manilles de fixation de moteur d'aéronef comportant deux liaisons rotules avec des axes portés par des chapes, quand les manilles comportent des formes susceptibles de rentrer en contact avec les flancs de l'une ou l'autre des chapes.

## Revendications

1. Dispositif de fixation d'un moteur d'aéronef (2) à un mât (3) solidaire de la structure de l'aéronef, le dispositif de fixation comprenant :
- une poutre (31), apte à être solidarisée audit mât (3), et comprenant une première chape (35) qui comprend deux flancs (311, 312) reliés l'un à l'autre par un premier axe de fixation (350) ;
- une seconde chape (23), solidaire du moteur (2), et comprenant deux flancs reliés l'un à l'autre par un second axe de fixation (230) ;
- une manille (52) connectée audit premier axe (350) par l'intermédiaire d'une première liaison rotule (521), et au second axe (230) par l'intermédiaire d'une seconde liaison rotule (522) ;
le dispositif de fixation comprenant au moins une paire de rondelles (61, 62), disposées autour de l'un desdits axes (350, 230), de part et d'autre de ladite manille (52), et séparant ladite manille (52) des flancs (311, 312) de la chape portant ledit axe (350, 230),
**caractérisé en ce que** ladite manille (52) entre en contact avec lesdites rondelles (61, 62) dans ses positions extrêmes de rotation autour de l'axe passant par lesdites deux liaisons rotules (521, 522).

2. Dispositif de fixation selon la revendication 1, **caractérisé en ce que** lesdites rondelles (61, 62) sont constituées dans un matériau de dureté inférieure au matériau constituant ladite manille (52).

3. Dispositif de fixation selon l'une quelconque des revendications précédentes, **caractérisé en ce que** chacune desdites rondelles présente un bord externe circulaire.

4. Dispositif de fixation selon la revendication 3, **caractérisé en ce que** chacune desdites rondelles présente, à proximité dudit bord externe, un bourrelet périphérique.

5. Aéronef, comprenant un moteur (2) fixé à un mât (3) de fixation solidaire de la structure de l'aéronef, par l'intermédiaire d'un dispositif de fixation selon l'une quelconque des revendications 1 à 4.

## Patentansprüche

1. Befestigungsvorrichtung eines Luftfahrzeugmotors (2) an einem mit der Struktur des Luftfahrzeugs fest verbundenen Mast (3), wobei die Befestigungsvorrichtung enthält:
- einen Träger (31), der fest mit dem Mast (3) verbunden werden kann und eine erste Gabelbefestigung (35) enthält, die zwei die durch eine erste Befestigungsachse (350) miteinander verbundene Flanken (311, 312) enthält;
- eine zweite Gabelbefestigung (23), die fest mit dem Motor (2) verbunden ist und zwei Flanken enthält, die durch eine zweite Befestigungsachse (230) fest miteinander verbunden sind;
- einen Schäkel (52), der mit der ersten Achse (350) über eine erste Kugelgelenkverbindung (521) und mit der zweiten Achse (230) über eine zweite Kugelgelenkverbindung (522) verbunden ist;
wobei die Befestigungsvorrichtung mindestens ein Paar von Scheiben (61, 62) enthält, die um eine der Achsen (350, 230) zu beiden Seiten des Schäkels (52) angeordnet sind und den Schäkel (52) von den Flanken (311, 312) der die Achse (350, 230) tragenden Gabelbefestigung trennen,
**dadurch gekennzeichnet, dass** der Schäkel (52) in seinen Endstellungen der Drehung um die durch die zwei Kugelgelenkverbindungen (521, 522) gehende Achse mit den Scheiben (61, 62) in Kontakt kommt.

2. Befestigungsvorrichtung nach Anspruch 1, **dadurch gekennzeichnet, dass** die Scheiben (61, 62) aus einem Material mit einer geringeren Härte als das den Schäkel (52) bildende Material bestehen.

3. Befestigungsvorrichtung nach einem der vorhergehenden Ansprüche, **dadurch gekennzeichnet, dass** jede der Scheiben einen kreisförmigen Außenrand aufweist.

4. Befestigungsvorrichtung nach Anspruch 3, **dadurch gekennzeichnet, dass** jede der Scheiben in der Nähe des Außenrands einen Umfangswulst aufweist.

5. Luftfahrzeug, das einen Motor (2) enthält, der an einem fest mit der Struktur des Luftfahrzeugs verbundenen Befestigungsmast (3) über eine Befestigungsvorrichtung nach einem der Ansprüche 1 bis 4 befestigt ist.

## Claims

1. Device for attaching an aircraft engine (2) to a pylon (3) secured to the structure of the aircraft, the attachment device comprising:
- a beam (31), able to be secured to the said pylon (3) and comprising a first clevis mount (35) which comprises two cheeks (311, 312) connected to one another by a first clevis pin (350) ;
- a second clevis mount (23), secured to the engine (2) and comprising two cheeks connected to one another by a second clevis pin (230);
- a shackle (52) connected to the said first pin (350) by a first spherical joint (521) and to the second pin (230) by a second spherical joint (522);
the attachment device comprising at least one pair of washers (61, 62) which are positioned around one of the said pins (350, 230), one on each side of the said shackle (52), and separating the said shackle (52) from the cheeks (311, 312) of the clevis mount bearing the said pin (350, 230),
**characterized in that** the said shackle (52) in its extreme positions of rotation about the pin passing through the said two spherical joints (521, 522) comes into contact with the said washers (61, 62).

2. Attachment device according to Claim 1, **characterized in that** the said washers (61, 62) are made of a material of lower hardness than the material of which the said shackle (52) is made.

3. Attachment device according to either of the preceding claims, **characterized in that** each of the said washers has a circular external edge.

4. Attachment device according to Claim 3, **characterized in that** each of the said washers has a peripheral thickening near the said external edge.

5. Aircraft comprising an engine (2) fixed to a support pylon (3) secured to the structure of the aircraft by an attachment device according to any one of Claims 1 to 4.
